Europäisches Patentamt

European Patent Office

Office européen des brevets

(19)

(11) **EP 0 618 439 B1**

(12) **EUROPÄISCHE PATENTSCHRIFT**

(45) Veröffentlichungstag und Bekanntmachung des Hinweises auf die Patenterteilung:
**24.09.1997 Patentblatt 1997/39**

(51) Int Cl.⁶: **G01N 21/47**

(21) Anmeldenummer: **94101849.1**

(22) Anmeldetag: **08.02.1994**

(54) **Bildgebender optischer Aufbau zur Untersuchung stark streuenden Medien**

Imaging optical device for examination of strongly scattering media

Dispositif d'imagerie optique pour l'examen de milieux fortement diffusants

(84) Benannte Vertragsstaaten:
FR GB IT NL

(30) Priorität: **29.03.1993 DE 4310209**

(43) Veröffentlichungstag der Anmeldung:
**05.10.1994 Patentblatt 1994/40**

(73) Patentinhaber: **Bruker Medizintechnik GmbH**
D-76287 Rheinstetten (DE)

(72) Erfinder: **Knüttel, Alexander Dr.,**
**Room 202 Rockville, MD 20852 (US)**

(74) Vertreter: **KOHLER SCHMID + PARTNER**
**Patentanwälte**
**Ruppmannstrasse 27**
**70565 Stuttgart (DE)**

(56) Entgegenhaltungen:
- OPTICS LETTERS, Bd.17, Nr.1, 1. Januar 1992 Seiten 4 - 6 CLIVAZ ET AL. 'HIGH RESOLUTION REFLECTOMETRY IN BIOLOGICAL TISSUES'
- OPTICS LETTERS, Bd.12, Nr.3, 1. März 1987 Seiten 158 - 160 YOUNGQUIST ET AL. 'OPTICAL COHERENCE DOMAIN REFLECTOMETRY,ETC.'
- APPLIED OPTICS, Bd.26, Nr.1, 1. Januar 1987 Seiten 37 - 40 TATSUNO ET AL. 'DIODE LASER DIRECT MODULATION HETERODYNE INTERFEROMETER'
- APPLIED OPTICS, Bd.23, Nr.2, 15. Januar 1984 Seiten 269 - 273 OKAMOTO ET AL. 'FOURIER TRANSFORM SPECTROMETER,ETC.'
- APPLIED OPTICS, Bd.32, Nr.7, 1. März 1993 Seiten 1100 - 1103 LIU ET AL. 'PARTIALLY MULTIPLEXING SENSOR,ETC.'
- ELECTRONICS LETTERS, Bd.26, Nr.11, 24. Mai 1990 Seiten 700 - 702 TOIDA ET AL. 'EXPERIMENTAL VERIFICATION OF IMAGE DETECTION,ETC.'
- OPTICS COMMUNICATIONS, Bd.102, Nr.3, 1. Oktober 1993 Seiten 193 - 198 KNUTTEL ET AL. 'STATIONARY DEPTH PROFILING REFLECTOMETER,ETC.'
- OPTICS LETTERS, Bd.18, Nr.7, 1. April 1993 Seiten 546 - 548 CHIANG ET AL. 'IMAGING THROUGH RANDOM SCATTERING MEDIA,ETC.'

**Beschreibung**

Die Erfindung betrifft einen bildgebenden optischen Aufbau zur Untersuchung stark streuender Medien, insbesondere biologischer Gewebeproben, mit mindestens 1-dimensionaler Ortsauflösung immer unter Einschluß der Tiefenrichtung eines Meßobjekts, mit einer Strahlenquelle zum Aussenden von Licht mit kurzen Kohärenzlängen von weniger als 0,1 mm, mit einer Vorrichtung zur Aufspaltung des niederkohärenten Lichts in zwei Teilstrahlen, von denen einer in einem Objektarm zum Meßobjekt und der andere in einem Referenzarm zu einem reflektierenden Element geführt wird, und mit einer Detektoranordnung, auf die die von dem reflektierenden Element im Referenzarm und von dem Meßobjekt im Objektarm reflektierten Teilstrahlen gelenkt, zur Interferenz miteinander gebracht und nachgewiesen werden können.

Ein solcher Aufbau ist beispielsweise aus Clivaz et al., OPTICS LETTERS Vol. 17, No. 1 (1992) 4-6 bekannt. Ähnliche Vorrichtungen sind aber auch in Takata et al., APPLIED OPTICS, Vol. 26, No. 9 (1987) 1603-1606, Takata et al., APPLIED PHYSICS LETTERS 59 (2) (1991) 143-145 oder Swanson et al., OPTICS LETTERS Vol. 17, No. 2 (1992) 151-153 offenbart.

Optische Bildgebung in stark streuenden Materialien, wie z.B. in vivo Gewebe, wird immer mehr zum Hilfsmittel für medizinische Forschung und Diagnostik. "Klassische" optische Verfahren wie z.B. die Mikroskopie können in stark streuenden Materialien nicht eingesetzt werden, da die mittlere freie Weglänge, über die ein Lichtstrahl nicht abgelenkt wird, weniger als 100 µm beträgt. Das bedeutet, daß mit geometrischer Optik (z.B. konfokaler Mikroskopie) keine Eindringtiefen größer als 50 - 100 µm möglich sind, da der diffuse Streulicht-Anteil exponentiell anwächst und den Kontrast der Bilder zerstört.

Die wichtigsten Verfahren zur dreidimensionalen Bildgebung bis in Tiefen von wenigen Millimetern in stark streuenden Materialien basieren einerseits auf der Nieder-Kohärenz- und andererseits auf der Kurz-Zeit-Interferometrie. Beide Verfahren unterscheiden sich im wesentlichen nur durch die Lichtquellen, wobei die emittierten Strahlungen in beiden Fällen kurze Kohärenzlängen von typisch 10 - 30 µm aufweist. Bei der Nieder-Kohärenz Interferometrie wird eine billige inkohärente Lichtquelle (z.B. SLD oder LED) eingesetzt, während bei der Kurz-Zeit Interferometrie ein teurer (kohärenter) Mode-locked Laser die kurzen Lichtpulse erzeugt.

Das häufig angewandte Michelson-Interferometer ist nachfolgend kurz beschrieben. Das kollimierte Licht der Lichtquelle wird durch einen Strahlteiler geteilt und trifft im Referenzarm auf einen Spiegel und im Objektarm nach entsprechender Fokussierung auf das Objekt. Nach Reflektion eines Punktes im Objekt und auf dem Spiegel wird das Licht im Strahlteiler wieder zusammengeführt und danach von z.B. einer Photodiode detektiert. Wenn die optische Wegstrecke des Objektarmes (definiert durch den Mittelpunkt des Strahlteilers und einem Punkt in dem Objekt) und die des Referenzarmes bis auf eine Abweichung in der Größenordnung der Kohärenzlänge identisch ist, interferieren beide Signale auf dem Detektor. Zum bequemen Nachweis eines AC-Signales (statt DC) wird der Referenz-Spiegel in der Regel mit entsprechender Frequenz entlang der optischen Achse mit kleiner Auslenkung vibriert. Während eines mechanischen Verschiebens des Referenz-Spiegels entlang der optischen Achse wird Punkt für Punkt das Objekt in der Tiefe abgetastet. Die starken Streu-Eigenschaften des Objektes beeinflussen die Qualität des (eindimensionalen) Bildes nicht, da nur die ungestreute kohärente Komponente zum AC-Signal beiträgt. Wegen des exponentiellen Signal-Abfalls der kohärenten Komponente sind allerdings nur begrenzte Eindringtiefen möglich (siehe z.B. M.R. Hee et al., J. OPT. SOC. AM. B, Vol. 9, No. 6 (1992) 903-908).

Wegen des mechanisch zu verschiebenden Referenz-Spiegels sind die bekannten Vorrichtungen aufwendig und teuer, mechanisch empfindlich sowie relativ langsam, da jeder Punkt entlang der Tiefenrichtung zeitlich sequentiell aufgenommen werden muß.

Aufgabe der vorliegenden Erfindung ist es daher, einen optischen Aufbau der eingangs genannten Art vorzustellen, der einfach und kostensparend, aber auch stabil und unempfindlich gegen mechanische Störungen ist, und der Bildaufnahmen in relativ rascher Folge ermöglicht.

Diese Aufgabe wird erfindungsgemäß dadurch gelöst, daß die Detektoranordnung eine räumliche Ausdehnung quer zur Auftreffrichtung der beiden Teilstrahlen auf die Detektoranordnung aufweist, über die ortssensitiv und simultan Lichtsignale aufgenommen werden können, und daß die beiden Teilstrahlen im Objektarm und im Referenzarm so geführt sind, daß entlang der lateralen Ausdehnung der Detektoranordnung aufgrund lateral getrennter virtueller Lichtquellen ein räumliches Interferenzmuster entsteht, wobei das reflektierende Element im Referenzarm nur statische, allenfalls im Mikrometerbereich vibrierende Teile aufweist.

Die Erfindung nützt das Prinzip der Nieder-Kohärenz (oder Kurz-Zeit) Interferometrie aus, allerdings ist das angewandte ein- oder mehrdimensionale (1D - 3D) bildgebende Verfahren stationär, d.h. keine mechanisch bewegten Teile werden benötigt und die Bildinformationen werden vom Detektor parallel und nicht zeitlich sequentiell aufgenommen.

Stationäre Fourier-Transformations Spektrometer ohne bildgebende Eigenschaften sind beispielsweise bekannt aus z.B. Junttila et al., J. Opt. Soc. Am. A, Vol. 8, No. 9 (1991) 1457-1462, Stroke et al., Phys. Lett. Vol. 16, No. 3 (1965) 272-274 oder Okamoto et al., Appl. Opt., Vol. 23, No. 2 (1984) 269-273.

Bei diesen bekannten Spektrometern wird ein zeitliches Interferogramm durch ein räumliches Interferogramm ersetzt, aus dem mittels Fouriertransformation ein Spektrum erzeugt wird. Die bekannten Spektrometer sind zur Bildgebung, insbesondere im Falle von stark streuenden Medien ungeeignet und erlauben insbesondere auch keine Ortsauflösung in Tiefenrichtung des Meßobjekts.

Bei dem erfindungsgemäßen Aufbau können Objekt-Signale entlang einer Linie in Tiefen-Dimension zeitgleich in eine laterale Dimension überführt und mit einem entsprechend gestalteten Detektor erfaßt werden. Wegen des stationären Aufbaus ergibt sich eine erhöhte Stabilität gegenüber mechanischen Erschütterungen, die Vorrichtung ist insgesamt sehr einfach aufgebaut und daher billig herzustellen und ermöglicht sehr schnelle Aufnahmefolgen.

Bei einer besonders einfachen Ausführungsform des erfindungsgemäßen optischen Aufbaus sind der Objektarm und der Referenzarm Teile eines Michelson-Interferometers. Es sind aber auch andere Aufbauten des Interferometerteils der erfindungsgemäßen Vorrichtung denkbar, beispielsweise Interferometer wie sie in Junttila et al. J. Opt. Soc. Am. A, Vol. 8, No. 9 (1991) 1457-1462 gezeigt und beschrieben sind.

Bei einer Ausführungform der Erfindung können mit der Detektoranordnung 2-dimensionale Abbildungen erfaßt werden. Dadurch kann bei der Bildgebung außer der Tiefen-Dimension eine weitere laterale räumliche Dimension erfaßt werden.

Zu diesem Zweck umfaßt bei einer Weiterbildung dieser Ausführungform die Strahlenquelle ein lateral zur Abstrahlungsrichtung angeordnetes, insbesondere lineares Array von Punktlichtquellen. Dabei können mehrere Punktstrahler nebeneinander angeordnet sein und gleichzeitig Licht emittieren.

Bei einer anderen Ausführungsform ist in Richtung des abgestrahlten Lichtes nach der Strahlenquelle eine Einrichtung zur nicht-mechanischen lateralen Ablenkung des aus der Strahlenquelle emittierten Lichtes vorgesehen. Auch damit kann eine laterale Verteilung des von der Strahlenquelle ausgehenden Lichtes erreicht werden. Ebenso wie bei der davorgenannten Ausführungsform kann damit neben der Tiefendimension auch eine Lateraldimension des zu untersuchenden Objekts abgetastet werden.

Bei einer weiteren Ausführungsform des erfindungsgemäßen optischen Aufbaus sind Einrichtungen zur drei-dimensionalen Bildgebung vorgesehen.

Diese können beispielsweise bei einer Ausführungsform eine in Richtung des abgestrahlten Lichtes nach der Strahlenquelle angeordnete Einrichtung zur nicht-mechanischen Ablenkung in einer lateralen Richtung, z.B. x, des aus der Strahlenquelle emittierten Lichtes umfassen, wobei die Strahlenquelle selbst ein in z.B. y-Richtung lateral zur Abstrahlungsrichtung angeordnetes, insbesondere lineares Array von Punktlichtquellen umfaßt.

Eine weitere Möglichkeit zur Realisierung der drei-dimensionalen Bildgebung besteht darin, daß eine zweite Einrichtung zur nicht-mechanischen lateralen Ablenkung vorgesehen ist, die das aus der Strahlenquelle emittierte Licht in eine Richtung quer zur Ablenkungsrichtung der ersten Einrichtung zur nicht-mechanischen lateralen Ablenkung ablenkt.

Bei einer besonders bevorzugten Ausführungsform ist eine Einrichtung zur Frequenz-Modulation der optischen Frequenz des Lichtes der beiden Teilstrahlen vorgesehen. Dadurch können AC-Signale in der Detektoreinrichtung erzeugt werden, wodurch die Verwendung eines Lock-in-Meßverfahrens ermöglicht wird, das der Unterdrückung des Rauschuntergrundes dient.

Die Modulation der Phasendifferenz kann bei einer Ausführungsform dadurch bewirkt werden, daß das reflektierende Element im Referenzarm ein mit einer definierten Frequenz vibrierender Reflektor, insbesondere ein vibrierender Spiegel mit Amplituden im μm-Bereich ist. Ein derartiger Spiegel kann die optische Frequenz des reflektierten Lichtes im Frequenzbereich von etwa 1 bis 100 kHz verschieben. Die üblicherweise verwendeten optischen Detektoren haben keine Probleme, die bei der Interferenz entstehenden amplitudenmodulierten Signale dieser Frequenz zu detektieren.

Bei einer anderen Ausführungsform ist im Strahlengang des Teilstrahls im Referenzarm oder im Objektarm eine nicht-mechanische Ablenkeinheit vorgesehen, mit der dem entsprechenden Teilstrahl eine bestimmte Frequenzverschiebung aufgeprägt werden kann. Eine solche nicht-mechanische Ablenkeinheit ist mechanisch robuster und in der Regel auch kompakter als ein vibrierender Spiegel.

Bei einer Weiterbildung dieser Ausführungsform kann die Einrichtung zur Frequenzmodulation ein piezoelektrisches Element umfassen. Bei einer anderen Weiterbildung kann die Ablenkeinheit ein akusto-optischer Modulator sein. Bei derartigen Ablenkeinheiten wird dem abgelenkten Strahl eine Frequenz von ungefähr 80 MHz aufgeprägt.

Diese relativ hohe Frequenz kann von einigen bekannten Detektoranordnungen wie z.B. CCD-Kameras nicht mehr aufgelöst werden. Daher ist bei einer bevorzugten Weiterbildung der oben genannten Ausführungsformen in Richtung des einfallenden Lichtes gesehen vor der Detektoranordnung eine Mikrokanalplatte (microchannelplate = MCP) mit einer Einrichtung zur gategesteuerten Aplitudenmodulation vorgesehen. Das auf die MCP einfallende, hochfrequenzmodulierte Licht kann von den anfänglichen ca. 80 MHz durch Umschalten zwischen der Verstärker und der Rejection-Mode in den Bereich von einigen kHz und darunter transformiert werden, so daß die Detektion an einer klassischen Detektoreinheit (CCD-Kamera) frequenzaufgelöst erfolgen kann.

Bei einer anderen Ausführungsform ist in Richtung des einfallenden Lichtes gesehen vor der Detektoranordnung eine weitere nicht-mechanische Ablenkeinheit vorgesehen, die die Frequenz des einfallenden Lichts, die bereits um etwa 80 MHz verschoben ist, mit einer geringfügig unterschiedlichen Hochfrequenz wieder zurückverschiebt, so daß es den Detektor letztlich mit einer langwelligen Schwebungsfrequenz im Kilohertzbereich, die der Differenzfrequenz entspricht, erreicht.

Bei einer alternativen Ausführungsform weist die Strahlenquelle eine Einrichtung zur Amplitudenmodulation des emittierten Lichts mit einer geringfügig unterschiedlichen Hochfrequenz gegenüber der nicht-mechanischen Ablenkeinheit auf. Auch dadurch kann die von der nicht-mechanischen Ablenkeinheit dem Lichtstrahl aufgeprägte Hochfrequenz, z.B. 80 MHz, auf ein von den bekannten Detektoreinheiten zeitlich auflösbares Maß herabgesetzt werden.

Bei einer besonders einfachen Ausführungsform des erfindungsgemäßen optischen Aufbaus umfaßt die Detektoranordnung ein lateral ausgedehntes Fotodioden-Array. Das Array kann linear oder flächig angeordnet sein.

Bei einer alternativen Ausführungsform umfaßt die Detektoranordnung eine CCD-Kamera (Charge-coupled device), wie beispielsweise aus Sweedler et al., APPLIED SPECTROSCOPY, Vol. 43, No. 8 (1989) 1378-1384 an sich bekannt ist.

Die Strahlenquelle kann bei Ausführungsformen der Erfindung eine lichtemittierende Diode (LED) umfassen, bei anderen Ausführungsformen eine Superlumineszenz-Diode (SLD) oder eine sonstige Quelle mit kurzer Kohärenzlänge wie beispielsweise einen Kurzzeitlaser.

Anstelle von Punktquellen kann auch eine lateral ausgedehnte, insbesondere flächig emittierende Lampe eingesetzt werden, was eine solche Ausführungsform besonders preisgünstig macht. Da ohnehin nur Licht mit kurzen Kohärenzlängen von weniger als 0,1 mm benutzt wird, kann auf eine teuere Lasereinrichtung oder eine Laserdiode verzichtet werden.

Bei einer besonders bevorzugten Ausführungsform ist der erfindungsgemäße optische Aufbau eine Freistrahlanordnung (free space device). Bei anderen Ausführungsformen können aber auch faseroptische Elemente verwendet werden.

In den Rahmen der vorliegenden Erfindung fällt auch die Verwendung eines oben beschriebenen optischen Aufbaus zur optischen Spektroskopie oder Spektrometrie. Die in dem Interferogramm aufgenommenen Peak-Werte des detektierten AC-modulierten Lichts weisen nämlich eine Feinstruktur auf, d.h., die Peaks sind Einhüllende unter einer Trägerfrequenz. Der Trägerfrequenz kann aber zusätzlich zu den räumlichen Informationen, die von den Peaks des Interferogramms widergegeben werden, spektroskopische Information über die Spektralverteilung aufgeprägt sein.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebiger Kombination Anwendung finden. Es zeigen:

Fig. 1        ein Funktionsschema eines stationären optischen Reflektometers gemäß der Erfindung;

Fig. 2a       ein schematisches Funktionsdiagramm einer erfindungsgemäßen Reflektionsanordnung für die 2D-Bildgebung;

Fig. 2b       ein schematisches Funktionsdiagramm einer erfindungsgemäßen Transmissions-Anordnung für die 2D-Bildgebung;

Fig. 2c       ein Schema wie in Fig. 1, wobei im Objektarm eine nicht-mechanische Ablenkeinheit eingebaut ist;

Fig. 3        ein räumliches Funktionsschema einer erfindungsgemäßen Reflektions-Anordnung für die 3D-Bildgebung;

Fig. 4        ein schematisches Prinzipdiagramm für die optische Funktionsweise der Anordnung nach Fig. 1;

Fig. 5a       eine AC-Meßgröße über der optischen Wegdifferenz $z_1$ (Moire-Profil), aufgenommen mit einem niederauflösenden linearen Fotodioden-Array (durchgezogene Linie) und einer gescanten Einzelelement-Fotodiode (gestrichelte Linie) ; und

Fig. 5b       ein gemessenes AC-Signal über der Array-Elementnummer aus einer prinzipiellen Meßanwendung zur Bestimmung der Dicke eines Plastikfilms.

Nieder-Kohärenz-Interferometrie wurde zum wichtigen Werkzeug für eine kontaktlose Tiefenprofilierung bei Lichtfasern, integrierter Optik und biologischen Strukturen im dem Reflexionsmodus mit hoher räumlicher Auflösung. Bei allen derzeit bekannten Interferenzreflektometern wird eine Tiefenabtastung durch einen sich bewegenden Spiegel erreicht. Obwohl es Geräte mit hohen Spiegelgeschwindigkeiten gibt, ist bei vielen Anwendungen eine Datenerfassung bei Geschwindigkeiten erforderlich, die für mechanisch-bewegte Teile zu schnell sind. In der biologischen und medizinischen Diagnostik müssen Messungen im Vergleich zur Bewegung eines Patienten schnell durchgeführt werden. Bei der Steuerung von Verfahrens- und Montierfließbändern ist eine schnelle Datenerfassung für einen hohen Durchsatz erforderlich. Zusätzlich können fest angebrachte Geräte zu geringen Kosten kompakt und robust gemacht werden.

Das Gerät gemäß der vorliegenden Erfindung ist das erste Tiefenprofilierungs-Reflektometer auf der Basis von Interferenzmeßverfahren mit niedriger Kohärenz, bei dem keine mechanisch sich bewegenden Teile verwendet werden.

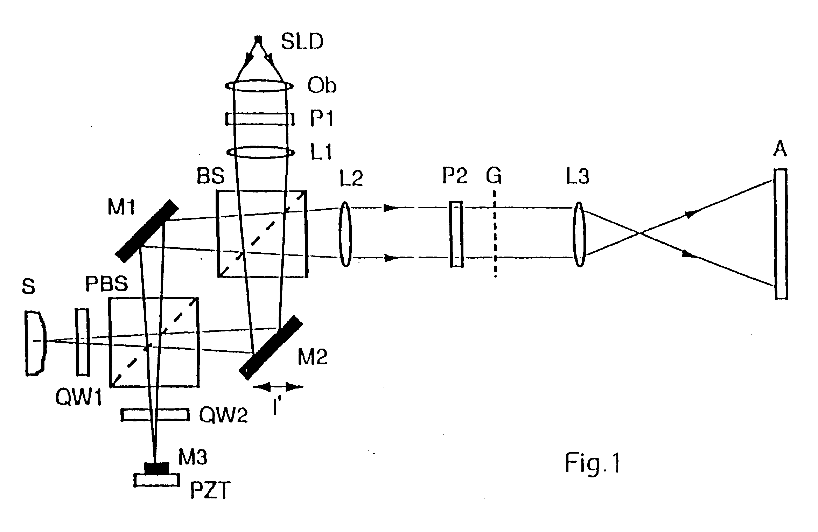

Der optische Aufbau eines erfindungsgemäßen stationären Reflektometers ist in der Fig. 1 gezeigt. Das Kernstück des Reflektometers ist ein Michelson-Interferometer, das Teil eines Interferometers vom Sagnac-Typ mit rechtwinkligen Lichtwegen ist. Bei dem Michelson-Interferometer wird das Licht von der Quelle durch einen polarisierenden Strahlteiler-Würfel PBS in zwei Strahlen aufgespaltet. Die Teilstrahlen werden auf einen Objektarm und einen Referenzarm gerichtet, die auf der Probe S bzw. auf einem Referenzspiegel M3, der mit einem piezoelektrischen Wandler PZT verbunden ist, enden. Das Interferometer des Sagnac-Typs besteht aus einem nicht-polarisierenden Strahlenteiler-Würfel BS und zwei Spiegeln M1 und M2.

Licht von einer breitbandigen superlumineszierenden Diode SLD mit einem sehr kleinen Emissionsfläche wird durch eine Objektivlinse Ob (x10) parallel auf einen Strahlendurchmesser von 7mm kollimiert. Die Linse L1 mit einer Brennweite von f = 150mm fokussiert Licht auf die Probe und auf den Spiegel M3. Nach Rückreflexion werden Objekt- und die Referenzstrahl wieder durch die Linse L2 (f = 150 mm) rückkollimiert. In Abhängigkeit der Position 1' von M2 relativ zu M1, erscheinen Interferenzränder mit variablen Abständen, die horizontal (in der Ebene der Fig. 1) in der Gitterebene, die am hinteren Brennpunkt von L2 angeordnet ist, ausgerichtet sind. Das Gitter G (80 L/mm) überlagert die räumliche Frequenz des Interferenzmusters bis zu einer geringen räumlichen Frequenz, um eine Detektion durch eine lineare Photodiodenanordnung mit geringer Auflösung zu ermöglichen. Die in Fig. 1 gezeigte (fakultative) abbildende Linse L3 (f = 62,5 mm) vergrößert das Moiremuster, wobei die Fähigkeit der Groß-Element-Detektoranordnung, kleine optische Wegdifferenzen aufzulösen, weiter verbessert wird.

Um eine optimale Durchsatzwirkung zu gewährleisten, muß der Polarisationszustand des Lichtes an verschiedenen Stellen im Interferometer genau angepaßt werden. Der Polarisator P1 läßt nur vertikal polarisiertes Licht (Polarisationsebene senkrecht zu der Ebene der Fig. 1) in das Interferometer eindringen. Nachdem das Licht durch den nicht-polarisierenden Strahlteiler-Würfel BS aufgespalten wurde, werden die zwei abgehenden Teilstrahlen innerhalb des polarisierenden Strahlteilers PBS auf die Probe bzw. den Spiegel M3 nur reflektiert und nicht transmittiert. Um in dem Interferometer des Sagnac-Typs einen Strahlenweg im und gegen den Uhrzeigersinn zu schaffen, muß das von der Probe S und dem Spiegel M3 reflektierte Licht durch den polarisierende Strahlenteiler-Würfel dringen. Um dies zu erreichen, wird die Polarisationsebene des Lichtes in die Horizontale (Ebene der Fig. 1) gedreht, indem das Licht zweimal durch jede der Viertelwellenlängen-Plättchen QW1 und QW2 hindurchgelassen wird. Die Polarisationsebene des Polarisators P2 wird in horizontaler Richtung eingestellt, um zu verhindern, daß restliches vertikal polarisiertes Licht die Detektoranordnung A erreicht. Wenn alle optischen Elemente perfekt wären und der Spiegel M3 und die Probe S das zirkular polarisierte Licht perfekt reflektieren würden (was unwahrscheinlich ist, insbesondere im Falle einer nicht spiegelnden reflektieren Probe), dann wäre die Signaleffizienz des vorliegenden Interferometers und des nicht modifizierten Sagnac-Interferometers gleich.

Um den Rauschuntergrund zu verringern, wird das optische Interferenzmuster phasenmoduliert, indem ein Spiegel M3 mit 30 kHz durch einen piezoelektrischen Wandler PZT vibriert wird. Da die Verschiebung des PZT nur einen Bruchteil einer Wellenlänge beträgt, kann die vorliegende Methode ohne weiteres als stationär betrachtet werden. Bei dem Reflektometer wird sowohl räumlich heterodyn überlagerte Mischung (um die Verwendung von Detektor-Anordnungen mit geringer Auflösung zu ermöglichen) und zeitliche homodyne Mischung (um den Störabstand zu verbessern) angewandt.

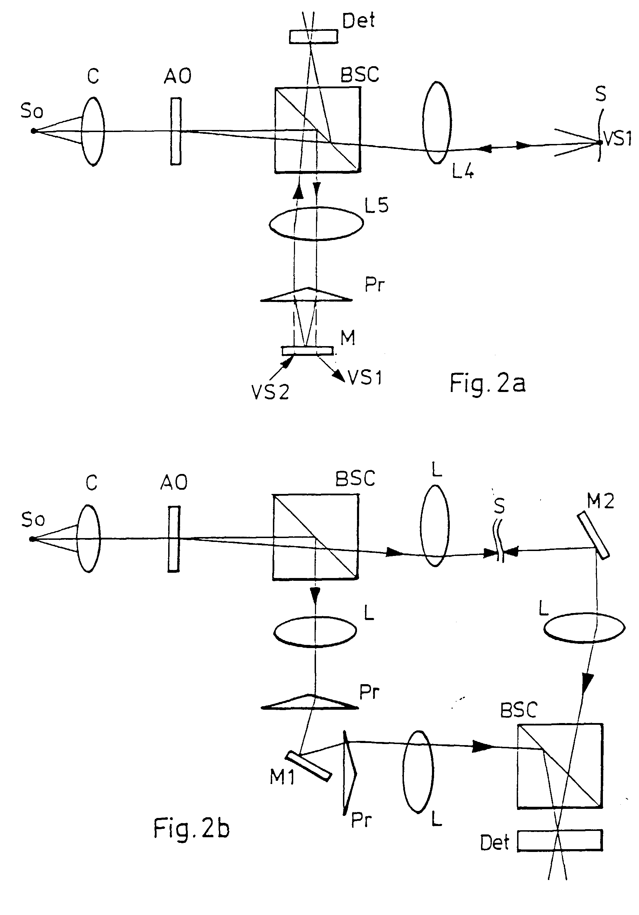

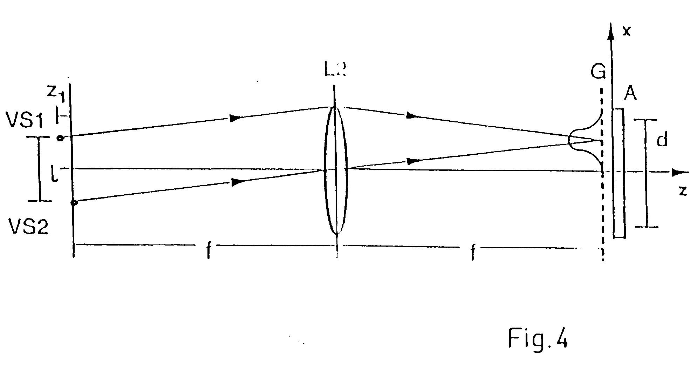

In Fig. 2a ist eine besonders bevorzugte Ausführungsform einer Reflektions-Anordnung (bzgl. Objekt) für die 2D-Bildgebung gezeigt. Emittiertes Licht von einer inkohärenten punktförmigen Lichtquelle So wird mit Hilfe einer Linse C zu einem parallelen Lichtbündel von etwa 10 mm Durchmesser kollimiert. Etwa 50 % des Lichtes wird nicht-mechanisch (z.B. durch einen akusto-optischen Modulator AO) abgelenkt, während die anderen 50 % das Bauelement unbeeinflußt passieren. Der durch den AO abgelenkte Strahl passiert direkt einen den Strahlteiler BSC und wird durch eine Linse L4 auf ein Objekt S fokussiert. Der damit erzeugte Punkt-Strahler entspricht einer virtuellen Quelle VS1, wie in Fig. 4 und unten näher erläutert.

Der durch den AO unabgelenkte Strahl wird durch den Strahlteiler BSC rechtwinklig abgebeugt und durch eine Linse L5 auf einen Spiegel M fokussiert. Ein Prisma Pr (oder eine Kombination von Spiegeln) verschiebt die virtuelle Quelle VS2 entlang des Spiegels in lateraler Richtung. Der Schnittpunkt der gestrichelten Linien mit dem Spiegel zeigt die Verschiebung von VS2 relativ zu VS1 an, wie unten näher erläutert. Die nach Reflektion rekollimierten Objekt- und Referenz-Strahlen treffen nach dem Strahlteiler BSC auf einem Detektor Det (z.B. 1D-CCD-Kamera oder Photodioden-Array) zur Interferenz zusammen. Für jeden Punkt in lateraler Richtung wird die Tiefen-Information des Objektes in einem "Schuß" auf den Detektor übertragen.

In Fig. 2b ist eine besonders bevorzugte Ausführungsform einer Transmissions-Anordnung (bzgl. Objekt) für die 2D-Bildgebung gezeigt. Dies ist eine durch die Spiegel M1 und M2 "aufgeklappte" Version von Fig. 2a, d.h. die Strahlen durchlaufen nicht mehr die identisch gleichen Bauelemente. Da das Prinzip exakt dem von Fig. 2a entspricht, wird auf eine detaillierte Beschreibung verzichtet.

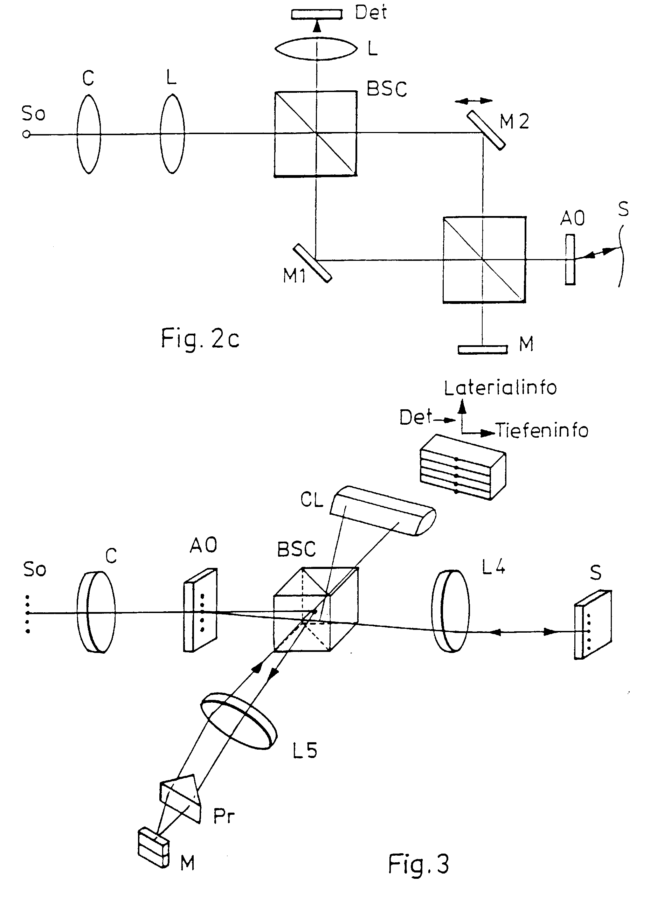

In Fig. 2c ist eine weitere mögliche Ausführungsform einer Reflektions-Anordnung für die 2D-Bildgebung gezeigt, die im wesentlichen der Fig. 1 entspricht und oben im Detail beschrieben wurde. Der wesentliche Unterschied zur Anorndung nach Fig. 1 besteht darin, daß im Objektarm eine nicht-mechanische Ablenk-Einheit (z.B. akusto-optischer Modulator AO) eingebaut ist.

In Fig. 3 ist eine besonders bevorzugte Ausführungsform einer Reflektions-Anordnung (bzgl. Objekt) für die 3D-Bildgebung gezeigt. Hier ist im wesentlichen der Aufbau nach Fig. 2a zugrunde gelegt. Die Lichtquelle besteht z.B. aus einem 1D-Array von Punktquellen So, welche 1D virtuelle Quellen im Objekt S und auf dem Spiegel M erzeugen. Eine Zylinderlinse CL fokusiert die laterale Objekt-Information auf eine Achse des 2D-Detektors (z.B. CCD Kamera) während die Tiefen-Information auf die andere Achse übertragen wird. Damit ist eine 2D-Bildaufnahme analog zu der des Ultraschalls in einem "Schuß" möglich. Mit der nicht-mechanischen Ablenkeinheit (z.B. AO) ist dann ein weiteres laterales Abtasten zur 3D-Bildgebung möglich. Analog zu Fig. 2b kann auch hier eine Transmissions-Anordnung ausgeführt werden (nicht gezeigt).

Bei Beschränkung auf 1D- bzw. 2D-Bildgebung kann die nichtmechanische Ablenkeinheit (z.B. AO) weggelassen werden. In diesem Fall kann ein für die Verwendung der Lock-in-Technik zur Rauschunterdrückung notwendiges AC Signal am Detektor durch einen vibrierenden (statt wie bisher statischen) Referenz-Spiegel erzeugt werden.

Im Falle eines eingesetzten akusto-optischen Modulators AO kann dessen intrinsische Frequenzverschiebung zu einem AC Signal ausgenützt werden. Ist die Frequenzverschiebung von etwa 80 MHz für den verwendeten Detektor zu groß, so kann mit folgenden Verfahren die AC Frequenz herabgesetzt werden:

Ein zweiter AO kann vorzugsweise in der Nähe des Detektors angeordnet werden und eine leicht unterschiedliche Frequenzverschiebung gegenüber dem ersten AO aufweisen, wodurch nur die niederfrequente Differenzfrequenz $\Delta f$ zwischen den beiden Frequenzen der AOs vom Detektor verarbeitet werden muß.

Durch Einsatz einer Mikrokanalplatte (microchannel plate = MCP) vor dem Detektor und entsprechender Gate AM-Modulation des MCP kann die hohe, vom AO aufmodulierte Frequenzverschiebung bis auf wenige kHz und darunter heruntertransformiert werden.

Durch entsprechende AM-Modulation der Lichtquelle kann ebenfalls das gleiche erreicht werden.

Die Linsen L1-L5, L können vorzugsweise die gleichen Brennweiten haben, was jedoch nicht zwingend ist. Als Strahlenquelle für die erfindungsgemäße Anordnung kommen auch relativ preisgünstige, flächenmäßig ausgedehnte Lichtquellen (einfache Lampen) in Frage. Auch die Verwendung von Glasfaseroptik ist bei den erfindungsgemäßen Aufbauten möglich, wobei dann allerdings bei der Zusammenführung des reflektierten Objektstrahls und des Teilstrahls aus dem Referenzarm der Anordnung auf der Detektoroberfläche nur kleine relative Winkel zwischen den beiden Teilstrahlen auftreten dürfen.

Der Interferometerteil der erfindungsgemäßen Anordnung beschränkt sich nicht auf einen stationären Michelson-Aufbau, sondern es kommen beispielsweise auch ein Mach-Zehnder-Aufbau, ein Triangel-Interferometer-Aufbau, ein Doppelspiegel-Interferometer-Aufbau mit ausgedehnter Quelle oder ein modifizierter Mach-Zehnder-Interferometer-Aufbau mit unkollimiertem Licht in Frage, wie sie in Junttila et al., J. Opt. Soc. Am. A, Vol. 8, No. 9 (1991) 1457-1462 beschrieben sind.

Die erfindungsgemäße Anordnung läßt sich auch in der Spektroskopie oder in der Spektrometrie einsetzen, d.h. zur bildhaften Erfassung von optischen Parametern wie Absorption, transienten Absorptions-Änderungen durch nichtlineare optische Effekte, Streukoeffizienten, Streu-Anisotropie, Polarisation (M.R. Hee et al., J.OPT. SOC. AM. B, Vol. 9, No. 6 (1992) 903-908), oder elektrisch, magnetisch oder mechanisch induzierten optischen Effekten. Beispielsweise für Absorptions-Abmessungen (Junttila et al., J. Opt. Soc. Am. A, Vol. 8, No. 9 (1991) 1457-1462) können die bekannten Verfahren zur stationären Fourier-Transformations Spektrometrie in die bildgebenden Verfahren eingebaut werden. Spektroskopische Information kann insbesondere bei AC-Modulation den relativen Phasen bei den Teilstrahlen in der erfindungsgemäßen Anordnung aus der gemessenen Trägerfrequenz entnommen werden, während die Einhüllenden des aufgenommenen Interferogramms die Orts- bzw. Strukturinformationen über das gemessene Objekt enthalten.

Das Grundprinzip für die Funktionsweise der Anordnung nach Fig. 1 wird anhand der Fig. 4 erklärt. Im Gegensatz zum "klassischen" Intererenz-Verfahren wo der Objekt- und Referenz-Punkt auf der optischen Achse liegen (in lateraler Richtung nicht getrennt) sind hier beide Punkte VS1 und VS2 lateral voneinander getrennt. Strahlen vom Objekt-Punkt (VS1) und Referenz-Punkt (VS2) interferieren nur dann miteinander, wenn beide optischen Wegstrecken bis hin zum gemeinsamen Punkt auf dem 1D-Detektor-Array sich um nicht mehr als eine Kohärenz-Länge unterscheiden. Dies kann für unterschiedliche Objekt-Tiefen nur erreicht werden, wenn die Strahlen mit der optischen Achse einen Winkel bilden. Die Signale entlang der Tiefe werden über die Winkel-Informationen zeitlich in Signale entlang einer lateralen Richtung umgewandelt.

Fig. 4 zeigt ein äquivalentes Diagramm des optischen Systems in Fig. 1, welches für eine Analyse hilfreich ist. VS1 und VS2 sind die zwei virtuellen Quellen (gegenseitige Kohärenz) die an den Brennpunkten der Probe S und des Spiegels M3 (siehe Fig. 1) angeordnet sind. Der Abstand zwischen den virtuellen Quellen ist gegeben durch l = 2l', wobei l' die relative Verschiebung des Spiegels M2 (siehe Fig. 1) darstellt. VS2 liegt in der vorderen Brennebene der Linse L2. VS1 ist ein Reflexionspunkt in der Brennpunktregion in der Probe, wird als um einen kleinen Abstand $z_l$ von der Brennebene in Tiefenrichtung verschoben angenommen. Das Gitter G ist in der hinteren Brennebene von L2 und das Detektor-Array A ist sehr dicht hinter G (ohne die Vergrößerungslinse L3 der Fig. 1) angeordnet. Ein Moiremuster ist entlang dem Durchmesser d sichtbar.

Nun kann ein Ausdruck für die Intensitätsverteilung I(x) des auf der Detektorebene gebildeten Interferogramms im Hinblick auf die in Fig. 4 definierten Variablen erhalten werden. Im speziellen Fall von $z_l = 0$ hängt der Kontrast des Interferenzrandmusters aufgrund des optischen Fourier-Transformations-Aufbaus nicht von der Ausdehnung der virtuellen Quellen ab. Da im vorliegenden Fall die Differenz $z_l$ der optischen Weglänge viel geringer ist als die Brennweite der Linse L2, können die virtuellen Quellen als Punktquellen behandelt werden. Die elektrische Feldverteilung $E_n(X)$ in der hinteren Brennebene für ein Objekt n in der Nähe der vorderen Brennebene ist gegeben durch

$$E_n(X) = K \exp[i(\omega t - k(2f+z_n))] \exp\left[\frac{ikx^2}{2f^2} z_n\right] T_n(u_n) . \qquad [1]$$

Die Fourier-Transformierte $T_n(U_n)$ der räumlichen Verteilung jedes (Quellen) Objektes n ist eine Funktion der zugeordneten Variablen $U_n = -x/(\lambda(f+z_n))$, wobei $z_n$ die Differenz des optischen Weges zwischen dem Objekt und der vorderen Brennebene in Tiefenrichtung ist. Die Intensitätsverteilung I(x) des Interferogramms (ohne Gitter) ist gegeben durch das Quadrat der Summe der elektrischen Feldbeiträge $E_n(X)$ von beiden Quellen. Angenommen, daß die Quellen räumliche Verteilungen von Deltafunktion haben, so erhalten wir

$$I(X) = \int S(\upsilon)\left[1 + \cos(2\pi\upsilon x - 2\pi\upsilon \frac{f}{l} z_1 - 2\pi\upsilon \frac{z_1}{2f} x + 2\pi\upsilon \frac{z_1}{2f} \frac{x^2}{l}\right] d\upsilon , \qquad [2]$$

wobei $\upsilon = l/(\lambda_C f)$ die der Mittelwellenlänge $\lambda_C$ entsprechende fundamentale räumiche Frequenz ist und $S(\upsilon)$ ist die räumliche Intensitätsverteilung der Quelle. Es ist zu beachten, daß wir die Modulationstransferfunktion des optischen Aufbaus in diese Analyse nicht berücksichtigt haben. Angenommen, daß $S(\upsilon)$ symmetrisch ist, hat das Intensitäts-Interferogramm I(x) sein Maximum, wenn das Argument der Cosinusfunktion in Gleichung [2] Null ist. Unabhängig von den letzten zwei (sehr kleinen) Termen in dem Argument, kann die optische Wegtransferfunktion als

$$Tr = \frac{z_1}{x_m} = \frac{l}{f} , \qquad [3]$$

definiert werden, wobei der Abstand $x_m$ von der optischen Achse am Maximum des Intensitätsinterfergrogramms I(x) liegt.

Der dritte Term des (Cosinus) Arguments in Gleichung [2] zeigt, daß die fundamentale räumliche Frequenz um einen geringen Betrag $z_l/(2f)$ verschoben wird. Dies liegt daran, daß eine der Quellen leicht außerhalb der Brennebene von L2 liegt. Der vierte Term legt eine geringe lineare Verschiebung auf die fundamentale räumliche Frequenz als Funktion von x und ist noch kleiner als der dritte Term, vorausgesetzt daß x/l<1 ist. Da beide Terme im Bereich von $10^{-3}$ oder kleiner sind, können sie vernachlässigt werden.

Bei den hier aufgezeigten Experimenten wählen wir die Verwendung eines Gitters mit einer räumlichen Frequenz von 80 L/mm, um das Intensitäts-Interferogramm von seiner fundamentalen räumlichen Frequenz nach unten zu konvertieren, $\upsilon = l/(\lambda_C f)$. Ein Moiremuster mit einer oszillationsfreien Einhüllenden wurde in der Detektorebene erzeugt, indem der Abstand l (gleich der Hälfte der Verschiebung des Spiegels M2 in Fig. 1) verstellt wurde. Bei einer Mittelwellenlänge von SLD (840 nm) mußte dieser Abstand 10,08 mm sein. Gemäß Gleichung [3] ergibt dies eine optische Wegtransferfunktion von Tr = 67,2 μm/mm. Die nach oben konvertierte räumliche Frequenz trägt nicht zu dem Signal bei, da das Array eine Tiefpaß-Filterfunktion ausübt, weil seine Bildelementgröße im Vergleich zu dem Gitterabstand groß ist.

Die räumliche Auflösung des Reflektometers wird durch die Kohärenzlänge der Lichtquelle und der Auflösung der Detektoranordnung bestimmt. Um den Betrieb des Reflektometers zu demonstrieren, wurde zuerst das Moireprofil der superlumineszenten Diode mit einem linearen Detektor-Array mit geringer Auflösung und einem mechanisch abgetasteten Einzelelementdetektor aufgezeichnet. Bei diesen Experimenten wurde die Probe durch einen Spiegel ersetzt. Der Einzelelement-Detektor wurde verwendet, um ein Profil mit hoher Auflösung zu erhalten, um die Kohärenzlänge der Quelle genau zu bestimmen. Die superlumineszente Diode (Modell L3302, Hamamatsu Corp.) emittierte Licht bei

einer Mittelwellenlänge von $\lambda_C$ = 840 nm mit einer spektralen Halbwertsbreite von $\Delta\lambda$ = 10 nm bei Betrieb mit einem bestimmten Strom von 100 mA (1,9 mW Leistungsabgabe). Unter Annahme einer Gauß Spektralform hatte die Quelle eine theoretische Halbwerts-Kohärenzlänge von 31 µm, bei 0,44 $\lambda_C^2/\Delta\lambda$.

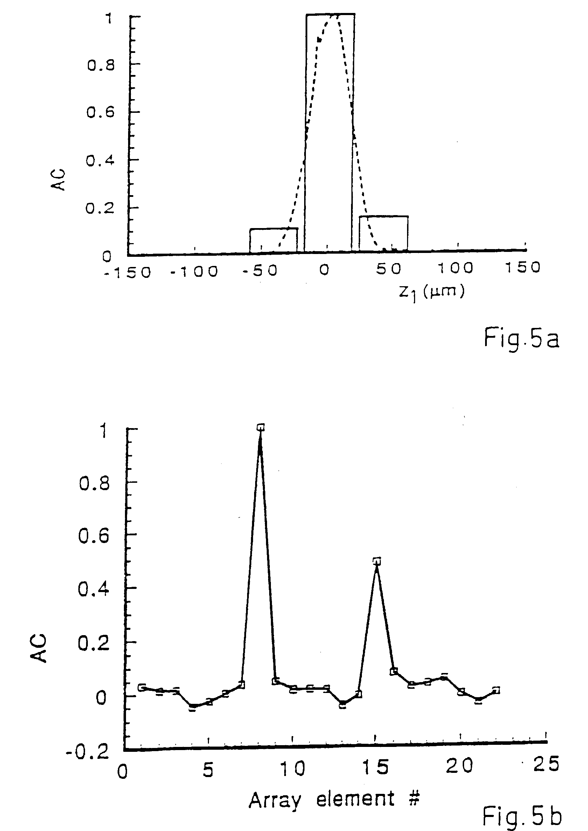

Das in Fig. 5a gezeigte Interferogramm wurde ohne Vergrößerungslinse L3 aufgenommen. Die gemessene Halbwerts-Kohärenzlänge (gestrichelte Linie) war 35 µm. Dieser Wert ist geringfügig größer als der theoretische Wert, da die Diode bei einem Strom betrieben wurde, der höher als angegeben war (110 mA anstatt 100 mA), wodurch seine spektrale Bandbreite verringert wurde.

Das auf die Detektoranordnung projezierte Moiremuster wies keine Oszillationen auf, wenn die Position von M2 exakt eingestellt wurde. Das lineare 50-Element Photodioden-Array (Modell LD50-5, Centronic, Inc.) mit geringer Auflösung, das in diesen Experimenten verwendet wurde, bestand aus 600 µm breiten Elementen mit einem Abstand zwischen den Mitten der Elementen von 700 µm. Ohne zusätzliche Vergrößerung war deshalb die kleinste mit der Anordnung detektierbare Differenz des optischen Weges Tr x 700 µm = 47 µm (mit einer optischen Wegtransferfunktion Tr = 67,2 µm/mm). Dieser Abstand ist geringfügig größer als die Kohärenzlänge, wie in Fig. 5a gezeigt.

Eine perfekte Anpassung der räumlichen Frequenz ist wichtig, um einen Signalverlust aufgrund von räumlicher Tiefpaßfilterung über jedem Bildelement zu verhindern. Der maximale dynamische Bereich dieser Anordnung war ~ -70 dB pro Bildelement, was von einem Spektralanalysegerät mit einer Sekunde Erfassungszeit gemessen wurde.

Die maximale zu detektierende optische Weglänge $z_{lmax}$ = Tr x d war ungefähr µm bei einer gemessenen Breite d des Moireprofils von ca. 4,5 mm. Obwohl im Idealfall in unserem Aufbau (ohne Vergrößerung) das Moireprofil über dem gesamten Durchmesser (7mm) des kollimierten Quellenstrahls sichtbar sein sollte, war die effektive Breite d kleiner, da die Sichtbarkeit in Richtung der Ränder des Strahles abfiel.

Um die bei einem vorhandenen Array mit geringer Auflösung erhältliche räumliche Auflösung zu erhöhen, wurden die in der Gitterebene gebildeten Ränder vergrößert und auf die endgültige Bildebene projiziert. Ein Vergrößerungsfaktor von ca. 2 ergab eine vergrößerte räumliche Auflösung von 23 µm. Da das Array sehr lang war, wurde die maximale optische Wegdifferenz $z_{lmax}$ nicht durch die Vergrößerung reduziert.

Als Anwendung zur Demonstration des Prinzips wurde die Dicke eines in Luft aufgehängten transparenten Plastikfilms gemessen. Fig. 5b zeigt die vorderen und hinteren Reflexionen des Films. Der Abstand zwischen den zwei Arrayelementen, bei denen die Spitzenreflexionen auftraten entsprach einer optischen Wegdifferenz von 161 µm. Bei der Annahme, daß der Film einen Brechungsindex von 1,4 hatte, war die tatsächliche Dicke dieser Plastikfolie ca. 58 µm unter Berücksichtigung des doppelten Weges durch die Probe im Reflexionsmodus. Die vorderen und hinteren Reflexionen traten bei den Bildanordnungselementen #8 und #15 auf.

Die beschriebene Ausführungsform der erfindungsgemäßen Anordnung, die hauptsächlich aus einem in einem Interferometer des Typs Sagnac miteinbezogenen Michelson-Interferometer besteht, kann eine maximale optische Wegdifferenz von 300 µm (150 µm in Tiefe beim Reflexionsmodus) mit einer Auflösung von 23 µm (mit einer zusätzlichen Vergrößerungslinse) messen.

Aufgrund von räumlicher Überlagerung durch ein Gitter bestimmt die Kohärenzlänge der Quelle die Größe des Detektorelementes, das benötigt wird, um Reflexionen in der Probe aufzulösen und nicht die Beabstandung der Ränder in dem nicht konvertierten Interferogramm.

**Patentansprüche**

1.  Bildgebender optischer Aufbau zur Untersuchung stark streuender Medien, insbesondere biologischer Gewebeproben, mit mindestens 1-dimensionaler Ortsauflösung immer unter Einschluß der Tiefenrichtung eines Meßobjekts, mit einer Strahlenquelle zum Aussenden von Licht mit kurzen Kohärenzlängen von weniger als 0,1 mm, mit einer Vorrichtung zur Aufspaltung des niederkohärenten Lichts in zwei Teilstrahlen, von denen einer in einem Objektarm zum Meßobjekt und der andere in einem Referenzarm zu einem reflektierenden Element geführt wird, und mit einer Detektoranordnung, auf die die von dem reflektierenden Element im Referenzarm und von dem Meßobjekt im Objektarm reflektierten Teilstrahlen gelenkt, zur Interferenz miteinander gebracht und nachgewiesen werden können,
    dadurch gekennzeichnet,
    daß die Detektoranordnung eine räumliche Ausdehnung quer zur Auftreffrichtung der beiden Teilstrahlen auf die Detektoranordnung aufweist, über die ortssensitiv und simultan Lichtsignale aufgenommen werden können, und daß die beiden Teilstrahlen im Objektarm und im Referenzarm so geführt sind, daß entlang der lateralen Ausdehnung der Detektoranordnung aufgrund lateral getrennter virtueller Lichtquellen ein räumliches Interferenzmuster entsteht, wobei das reflektierende Element im Referenzarm nur statische, allenfalls im Mikrometerbereich vibrierende Teile aufweist.

2.  Optischer Aufbau nach Anspruch 1, dadurch gekennzeichnet, daß der Objektarm und der Referenzarm Teile eines Michelson-Interferometers sind.

3. Optischer Aufbau nach Anspruch 1 oder 2, dadurch gekennzeichnet, daß die Detektoranordnung zum Erfassen 2-dimensionaler Abbildungen ausgebildet ist.

4. Optischer Aufbau nach Anspruch 3, dadurch gekennzeichnet, daß die Strahlenquelle ein lateral zur Abstrahlungsrichtung angeordnetes, insbesondere lineares Array von Punktlichtquellen umfaßt.

5. Optischer Aufbau nach Anspruch 3, dadurch gekennzeichnet, daß in Richtung des abgestrahlten Lichtes nach der Strahlenquelle eine Einrichtung zur nicht-mechanischen lateralen Ablenkung des aus der Strahlenquelle emittierten Lichtes vorgesehen ist.

6. Optischer Aufbau nach Anspruch 4 oder 5, dadurch gekennzeichnet, daß Einrichtungen zur 3-dimensionalen Bildgebung vorgesehen sind.

7. Optischer Aufbau nach Anspruch 4 und 6, dadurch gekennzeichnet, daß die Einrichtungen zur 3-dimensionalen Bildgebung eine in Richtung des abgestrahlten Lichtes nach der Strahlenquelle angeordnete Einrichtung zur nicht-mechanischen lateralen Ablenkung des aus der Strahlenquelle emittierten Lichtes umfassen.

8. Optischer Aufbau nach Anspruch 5 und 6, dadurch gekennzeichnet, daß eine zweite Einrichtung zur nicht-mechanischen lateralen Ablenkung vorgesehen ist, die das aus der Strahlenquelle emittierte Licht in eine Richtung quer zur Ablenkungsrichtung der ersten Einrichtung zur nicht-mechanischen lateralen Ablenkung ablenkt.

9. Optischer Aufbau nach einem der vorhergehenden Ansprüche, dadurch gekennzeichnet, daß eine Einrichtung zur Frequenz-Modulation der optischen Frequenz des Lichtes der beiden Teilstrahlen vorgesehen ist.

10. Optischer Aufbau nach Anspruch 9, dadurch gekennzeichnet, daß das reflektierende Element im Referenzarm ein mit einer definierten Frequenz vibrierender Reflektor, insbesondere ein vibrierender Spiegel ist.

11. Optischer Aufbau nach Anspruch 9, dadurch gekennzeichnet, daß im Strahlengang des Teilstrahls im Referenzarm oder im Objektarm eine nicht-mechanische Ablenkeinheit vorgesehen ist, mit der dem entsprechenden Teilstrahl eine bestimmte Frequenzverschiebung aufgeprägt werden kann.

12. Optischer Aufbau nach einem der Ansprüche 9 bis 11, dadurch gekennzeichnet, daß die Einrichtung zur Frequenz-modulation ein piezoelektrisches Element umfaßt.

13. Optischer Aufbau nach Anspruch 11, dadurch gekennzeichnet, daß die Ablenkeinheit ein akusto-optischer Modulator ist.

14. Optischer Aufbau nach einem der Ansprüche 11 bis 13, dadurch gekennzeichnet, daß in Richtung des einfallenden Lichtes gesehen vor der Detektoranordnung eine Microkanalplatte (microchannelplate = MCP) mit einer Einrichtung zur gategesteuerten Amplitudenmodulation vorgesehen ist.

15. Optischer Aufbau nach einem der Ansprüche 9 bis 13, dadurch gekennzeichnet, daß in Richtung des einfallenden Lichtes gesehen vor der Detektoranordnung eine weitere nicht-mechanische Ablenkeinheit zur Frequenz-Rückverschiebung vorgesehen ist.

16. Optischer Aufbau nach einem der Ansprüche 9 bis 13, dadurch gekennzeichnet, daß die Strahlenquelle eine Einrichtung zur Amplitudenmodulation des emittierten Lichts aufweist.

17. Optischer Aufbau nach einem der vorhergehenden Ansprüche, dadurch gekennzeichnet, daß die Detektoranordnung ein lateral ausgedehntes Photodioden-Array umfaßt.

18. Optischer Aufbau nach einem der Ansprüche 1 bis 16, dadurch gekennzeichnet, daß die Detektoranordnung eine CCD-Kamera (Charge-coupled device) umfaßt.

19. Optischer Aufbau nach einem der vorhergehenden Ansprüche, dadurch gekennzeichnet, daß die Strahlenquelle eine licht-emittierende Diode (LED) umfaßt.

**20.** Optischer Aufbau nach einem der vorhergehenden Ansprüche, dadurch gekennzeichnet, daß die Strahlenquelle eine Superlumineszenz-Diode (SLD) umfaßt.

**21.** Optischer Aufbau nach einem der vorhergehenden Ansprüche, dadurch gekennzeichnet, daß die Strahlenquelle einen Kurzzeitlaser umfaßt.

**22.** Optischer Aufbau nach einem der vorhergehenden Ansprüche, dadurch gekennzeichnet, daß die Strahlenquelle lateral ausgedehnt, insbesondere eine flächig emittierende Lampe ist.

**23.** Optischer Aufbau nach einem der vorhergehenden Ansprüche, dadurch gekennzeichnet, daß der optische Aufbau eine Freistrahlanordnung (free space device) ist.

**24.** Verwendung eines optischen Aufbaus nach einem der vorhergehenden Ansprüche zur optischen Spektroskopie oder Spektrometrie.

## Claims

**1.** Optical imaging apparatus for the investigation of strongly scattering media, in particular biological tissue samples, with at least one-dimensional position resolution which always includes the depth direction of a measuring object, with a radiation source for the emission of light with short coherence length of at least 0.1 mm, with a device for splitting the low coherence length light into two partial beams, of which one is guided in an object arm to the measured object and the other in a reference arm to a reflecting element, and with a detector configuration onto which the partial beams reflected from the reflecting element in the reference arm and from the measured object in the object arm can be guided, brought into interference with another and detected, characterized in that, the detector configuration exhibits a spatial extent transverse to the direction of incidence of both partial beams on the detector configuration, over which light signals can be recorded in a position sensitive and simultaneous fashion and both partial beams in the object arm and in the reference arm are so guided that a spatial interference pattern forms along the lateral extent of the detector configuration due to the laterally spaced virtual light sources, whereby the reflecting element in the reference arm has only static parts which, at the most, vibrate in the micrometer range.

**2.** Optical apparatus according to claim 1, characterized in that the object arm and the reference arm are parts of a Michelson interferometer.

**3.** Optical apparatus according to claim 1 or 2, characterized in that the detector configuration is fashioned for recording two-dimensional images.

**4.** Optical apparatus according to claim 3, characterized in that the radiation source includes an array of point light sources arranged laterally to the direction of the radiation, in particular, a linear array.

**5.** optical apparatus according to claim 3, characterized in that a device for the non-mechanical lateral deflection of the light emitted from the radiation source is provided for along the direction of the radiated light downstream of the radiation source.

**6.** Optical apparatus according to claims 4 or 5, characterized in that devices are provided for three-dimensional imaging.

**7.** Optical apparatus according to claims 4 and 6, characterized in that the devices for three-dimensional imaging include a device, arranged along the direction of the radiated light downstream of the radiation source, for non-mechanical lateral deflection of the light emitted from the radiation source.

**8.** Optical apparatus according to claims 5 and 6, characterized in that a second device is provided for non-mechanical lateral deflection which deflects the light emitted from the radiation source in a direction transverse to the deflection direction of the first device for non-mechanical lateral deflection.

**9.** Optical apparatus according to one of the preceding claims, characterized in that a device for frequency modulation of the optical frequency of the light of both partial beams is provided for.

10. Optical device according to claim 9, characterized in that the reflecting element in the reference arm is a reflector vibrating with a defined frequency, in particular, a vibrating mirror.

11. Optical apparatus according to claim 9, characterized in that a non-mechanical deflection device is provided in the course of beam of the partial beam in the reference arm or in the object arm with which a predetermined frequency shift can be superimposed on the appropriate partial beam.

12. Optical apparatus according to one of the claims 9 through 11, characterized in that the device for frequency modulation includes a piezoelectric element.

13. Optical apparatus according to claim 11, characterized in that the deflection device is an acoustic optical modulator.

14. Optical apparatus according to one of the claims 11 through 13, characterized in that a microchannelplate (MCP) is provided, viewed in the direction of the incident light, in front of the detector configuration having a device for gate controlled amplitude modulation.

15. Optical apparatus according to one of the claims 9 through 13, characterized in that an additional non-mechanical deflection device is provided for along the direction of the incident light before the detector configuration to shift back the frequency.

16. Optical apparatus according to one of the claims 9 through 13, characterized in that the radiation source exhibits a device for amplitude modulation of the emitted light.

17. Optical apparatus according to one of the preceding claims, characterized in that the detector configuration includes a laterally extended photodiode array.

18. Optical apparatus according to one of the claims 1 through 16, characterized in that the detector configuration includes a CCD-camera (charge-coupled device).

19. Optical apparatus according to one of the preceding claims, characterized in that the radiation source includes a light emitting diode (LED).

20. Optical apparatus according to one of the preceding claims, characterized in that the radiation source includes a super-luminescent diode (SLD).

21. Optical apparatus according to one of the preceding claims, characterized in that the radiation source includes a short-time or pulsed laser.

22. Optical apparatus according to one of the preceding claims, characterized in that the radiation source is laterally extended, in particular, is an areally emitting lamp.

23. Optical apparatus according to one of the preceding claims, characterized in that the optical construction is a free space device.

24. Use of an optical apparatus according to one of the preceding claims for optical spectroscopy or spectrometry.

**Revendications**

1. Dispositif d'imagerie optique pour l'examen de milieux fortement diffusants, notamment d'échantillons de tissus biologiques, avec une résolution locale à au moins une dimension en incluant toujours la direction de profondeur d'un objet à mesurer, avec une source de rayonnement pour émettre de la lumière avec de courtes longueurs de cohérence inférieures à 0,1 mm, avec un dispositif pour diviser la lumière à basse cohérence en deux rayons partiels, dont l'un est guidé dans un bras d'objet vers l'objet à mesurer et l'autre dans un bras de référence vers un élément réfléchissant, et avec un dispositif détecteur, sur lequel les rayons partiels réfléchis par l'élément réfléchissant dans le bras de référence et par l'objet à mesurer dans le bras d'objet peuvent être dirigés, amenés en interférence mutuelle et décelés,
caractérisé en ce que le dispositif détecteur présente une étendue dans l'espace, transversalement à la direction d'incidence des deux rayons partiels sur le dispositif détecteur, sur laquelle des signaux lumineux peuvent être reçus de façon simultanée et avec détection de position, et en ce que les deux rayons partiels sont guidés dans le bras d'objet et dans le bras de référence de telle sorte qu'un modèle spatial d'interférence apparaît le long de l'étendue latérale du dispositif détecteur sur la base de sources lumineuses virtuelles latéralement séparées, l'élément réfléchissant dans le bras de référence présentant uniquement des éléments statiques, tout au plus vibrant dans la plage micrométrique.

2. Dispositif optique selon la revendication 1, caractérisé en ce que le bras d'objet et le bras de référence sont des éléments d'un interféromètre de Michelson.

3. Dispositif optique selon la revendication 1 ou 2, caractérisé en ce que le dispositif détecteur est conçu pour enregistrer des images à 2 dimensions.

4. Dispositif optique selon la revendication 3, caractérisé en ce que la source lumineuse comprend un agencement notamment linéaire de sources lumineuses ponctuelles, disposé latéralement à la direction de rayonnement.

5. Dispositif optique selon la revendication 3, caractérisé en ce qu'un dispositif pour la déflexion latérale non mécanique de la lumière émise par la source de rayonnement est prévu à la suite de la source de rayons dans la direction de la lumière rayonnée.

6. Dispositif optique selon la revendication 4 ou 5, caractérisé en ce que des dispositifs sont prévus pour la reproduction d'images à 3 dimensions.

7. Dispositif optique selon les revendications 4 et 6, caractérisé en ce que les dispositifs pour la reproduction d'images à 3 dimensions comprennent un dispositif, disposé à la suite de la source de rayonnement dans la direction de la lumière rayonnée, pour la déflexion latérale non mécanique de la lumière émise par la source de rayonnement.

8. Dispositif optique selon les revendications 5 et 6, caractérisé en ce qu'un deuxième dispositif est prévu pour la déflexion latérale non mécanique, qui dévie la lumière émise par la source de rayonnement dans une direction transversale à la direction de déflexion du premier dispositif pour la déflexion latérale non mécanique.

9. Dispositif optique selon une des revendications précédentes, caractérisé en ce qu'un dispositif est prévu pour la modulation de la fréquence optique de la lumière des deux rayons partiels.

10. Dispositif optique selon la revendication 9, caractérisé en ce que l'élément réfléchissant dans le bras de référence est un réflecteur vibrant à une fréquence définie, notamment un miroir vibrant.

11. Dispositif optique selon la revendication 9, caractérisé en ce qu'une unité de déflexion non mécanique est prévue dans le trajet du rayon partiel dans le bras de référence ou dans le bras d'objet, avec laquelle un décalage donné de fréquence peut être imprimé au rayon partiel correspondant.

12. Dispositif optique selon une des revendications 9 à 11, caractérisé en ce que le dispositif pour la modulation de fréquence comprend un élément piézoélectrique.

13. Dispositif optique selon la revendication 11, caractérisé en ce que l'unité de déflexion est un modulateur acousto-optique.

14. Dispositif optique selon une des revendications 11 à 13, caractérisé en ce qu'une galette de microcanaux, avec un dispositif pour la modulation en amplitude à commande de gâchette, est prévue avant le dispositif détecteur, considéré dans la direction de la lumière incidente.

15. Dispositif optique selon une des revendications 9 à 13, caractérisé en ce qu'une autre unité de déflexion non mécanique, pour le décalage inverse de fréquence, est prévue avant le dispositif détecteur, considéré dans la direction de la lumière incidente.

16. Dispositif optique selon une des revendications 9 à 13, caractérisé en ce que la source de rayonnement présente un dispositif pour la modulation en amplitude de la lumière émise.

**17.** Dispositif optique selon une des revendications précédentes, caractérisé en ce que le dispositif détecteur comprend une barrette de photodiodes latéralement étendue.

**18.** Dispositif optique selon une des revendications 1 à 16, caractérisé en ce que le dispositif détecteur comprend un appareil photographique à couplage de charge.

**19.** Dispositif optique selon une des revendications précédentes, caractérisé en ce que la source de rayonnement comprend une diode électroluminescente (DEL).

**20.** Dispositif optique selon une des revendications précédentes, caractérisé en ce que la source de rayonnement comprend une diode superluminescente (DSL).

**21.** Dispositif optique selon une des revendications précédentes, caractérisé en ce que la source de rayonnement comprend un laser ultra-rapide.

**22.** Dispositif optique selon une des revendications précédentes, caractérisé en ce que la source de rayonnement est latéralement étendue, notamment est une lampe émettant en nappe.

**23.** Dispositif optique selon une des revendications précédentes, caractérisé en ce que le dispositif optique est un dispositif à rayonnement direct (« free space device »).

**24.** Utilisation d'un dispositif optique selon une des revendications précédentes pour la spectrométrie ou la spectroscopie optique.

Fig. 1

Det

C AO BSC

So S

VS1

L4

L5

Pr

M

VS1

VS2 Fig.2a

C AO BSC L

So S M2

L

Pr L

BSC

M1

Pr L

Det

Fig.2b

Det

L

C       L       BSC

So                              M2

M1                      AO       S

Fig. 2c                          M

Lateralinfo

Det → ↗ Tiefeninfo

CL

C       AO      BSC              L4      S

So

L5

Pr

M                      Fig. 3

Fig. 4

Fig.5a

Fig.5b